# EUROPÄISCHE PATENTSCHRIFT

(11) **EP 1 087 021 B1**
(45) Veröffentlichungstag und Bekanntmachung des Hinweises auf die Patenterteilung: **06.08.2003**
(21) Anmeldenummer: 99118512.5
(22) Anmeldetag: 18.09.1999
(51) Int. Cl.: C14C 9/00, C08L 83/06, C08L 33/00

(54) **Lederbehandlungsmittel**
Leather-treatment agent
Agent de traitement du cuir

(43) Veröffentlichungstag der Anmeldung: 28.03.2001
(73) Patentinhaber: Trumpler GmbH & Co. Chemische Fabrik, 67547 Worms (DE)
(72) Erfinder: Burgess, David, 67550 Worms (DE); Wolf, Karl-Heinz, Dr., 67547 Worms (DE)
(74) Vertreter: KEIL & SCHAAFHAUSEN

(56) Entgegenhaltungen:
- EP-A- 0 757 108
- DE-C- 19 646 916
- US-A- 5 658 484
- US-A- 5 702 490

## Beschreibung

Gegenstand der Erfindung ist ein Lederbehandlungsmittel zum Hydrophobieren, Weichmachen, Füllen und Nachgerben von Leder sowie zur Erzeugung waschbarer Leder.

Es ist bekannt, dass klassische Hydrophobierungsmittel für Leder, die aus hochmolekularen, wasserunlöslichen Substanzen wie Paraffinen, Wachsen und Fettderivaten sowie geeigneten, die Hydrophobierung nicht beeinträchtigenden Emulgatoren vom Typ der Fettsäuresarkoside, Sulfosuccinate, Sulfosuccinamate, oder Phosphorsäureester bestehen können und die durch Senkung des pH-Wertes der Behandlungsflotte und nachträgliches Behandeln mit Metallsalzen auf der Lederfaser fixiert werden, im allgemeinen zu Leder mit guter Weichheit und angenehmem Griff führen, jedoch meist eine sehr unzureichende, nur eingeschränkt reproduzierbare Hydrophobierung bewirken.

Lösungsmittelhaltige Hydrophobierungssysteme, die z.B. Silikonöle oder Fluorcarbonharze enthalten und durch Spritzen, Rollen oder Walken auf das Leder aufgebracht werden, erzeugen zwar eine verbesserte Wasserfestigkeit, haben jedoch auch wesentliche Nachteile. Die Lösungsmittel - zumeist Benzine oder chlorierte Kohlenwasserstoffe - können zu Gesundheitsschädigungen des Anwenders führen und belasten die Umwelt. Zudem ist die Hydrophobierung mit diesen Systemen oberflächlich, was die spätere Färbung und Zurichtung der Leder erschwert und die Griffeigenschaften der Leder beeinträchtigt.

In den letzten Jahren sind zahlreiche Lederbehandlungsmittel zum Nachgerben, Füllen, Fetten und Hydrophobieren von Ledern und Pelzen in wässriger Lösung auf der Basis von Copolymerisaten entwickelt worden wie sie aus der US-Patentschrift 5 316 860 bekannt sind. Diese Copolymerisate bestehen aus hydrophilen und hydrophoben Monomerkomponenten in unterschiedlichen Mengenverhältnissen. Der hydrophile Teil des Copolymerisats bewirkt die Wasseremulgierbarkeit, der hydrophobe Teil erzeugt u.a. die fettende und hydrophobierende Wirkung des Copolymerisats. Typische hydrophile Monomerkomponenten in derartigen Systemen sind wasserlösliche, ethylenisch ungesättigte Verbindungen mit Säure-, Ester-, Amid- oder Anhydrid-Gruppen wie Acryl- oder Methacrylsäure, Dicarbonsäuren wie Malein- oder Fumarsäure oder Anhydride dieser Säuren. Bei den verwendbaren hydrophoben Monomeren handelt es sich um wasserunlösliche, ethylenisch ungesättigte Verbindungen, die direkt oder über Ester- oder ähnliche Gruppen an die Monomer-Doppelbindung gebundene lange Kohlenwasserstoffreste tragen. Beispiele für diese Monomeren sind langkettige α-Olefine, Vinylether, langkettige Malein-, Acryloder Methacrylsäureester. Die Copolymerisate liegen in neutralisierter Form als wässrige Emulsionen vor.

Aufgrund ihres langkettigen und mehrfunktionellen Aufbaus haben diese Copolymerisate nachgerbende, fettende, füllende und hydrophobierende Eigenschaften. Beim alleinigen Einsatz dieser Produkte zur Behandlung von Leder zeigen sich jedoch einige Nachteile der Copolymerisate. Die Hydrophobierung mit diesen Verbindungen genügt nicht immer den heute gestellten Anforderungen an die Wasserfestigkeit von Leder und sie ist häufig nicht ausreichend reproduzierbar. Der griffliche Charakter der mit diesen Copolymerisaten behandelten Leder ist oft unzureichend, denn die Leder wirken manchmal gummiartig und synthetisch.

Eine andere Möglichkeit zur Herstellung hydrophobierter Leder besteht in der Verwendung einfacher, nicht funktioneller Silikonöle (Polysiloxane) in Form wässriger Emulsionen in Gegenwart geeigneter, die Hydrophobierung nicht beeinträchtigende Emulgatoren, wie sie in der europäischen Patentschrift 0 213 480 beschrieben sind. Auch damit lässt sich jedoch eine den heutigen Anforderungen genügende Wasserdichtigkeit nicht erreichen. Aufgrund des Fehlens funktioneller Gruppen ist die Wasseremulgierbarkeit dieser Polysiloxane sehr stark eingeschränkt. Ihre Emulsionen sind häufig zu instabil, die Silikone dieses Typs binden sich nicht ausreichend an der Lederfaser. Sie "schwimmen" im Leder. Die Hydrophobierung mit diesen Produkten ist oft oberflächlich und nicht genügend reproduzierbar. Die fettende, weichmachende Wirkung dieser Silikonöle ist ungenügend. Der Griff der behandelten Leder ist typisch "silikonartig". Außerdem wird die Färb- und Zurichtbarkeit erschwert. Dieselben Nachteile gelten auch für viele Amino- und andere funktionelle Gruppen tragende Polysiloxane. Demgegenüber wird mit der Verwendung geeigneter carboxylfunktioneller Polysiloxane eine deutliche Verbesserung der Hydrophobierung von Leder erreicht. Carboxylfunktionelle Polysiloxane sind Verbindungen, die an ihrer Polysiloxan-Hauptkette über Kohlenwasserstoffreste gebundene Carbonsäure- oder Carbonsäureanhydridgruppen tragen. Die Carboxylgruppen können endständig oder seitenständig an der Hauptkette gebunden sein. Je nach Länge der Polysiloxankette, nach der Art der an Silizium gebundenen Kohlenwasserstoffreste und nach der Zahl der gebundenen Carboxylgruppen sind die carboxylfunktionellen Polysiloxane mehr oder weniger in Wasser selbst emulgierbar.

Auch in der europäischen Patentschrift 0 324 345 wird ein Verfahren zum Hydrophobieren von Leder und Pelzen mit selbstemulgierbaren, carboxylgruppenhaltigen Polysiloxanen in wässriger Emulsion beschrieben, wobei auf die Verwendung von Emulgatoren und sonstigen Hilfsmitteln verzichtet wird. Die dort verwendeten Carbonsäure- und Carbonsäureanhydridgruppen sind seitenständig oder vorzugsweise endständig über Kohlenwasserstoffreste an die Polysiloxan-Hauptkette gebunden. Mit diesem Verfahren werden - insbesondere bei Verwendung zusätzlicher handelsüblicher, klassischer Hydrophobierungsmittel auf der Basis von Paraffin- oder Wachsemulsionen - gut hydrophobierte Leder mit einer Bally-Penetrometer-Beständigkeit von 6 Stunden erhalten.

Die europäische Patentanmeldung 0 745 141 beschreibt ein verfahren zum Hydrophobieren von Leder und Pelzen mit kammartigen, also seitenständig carboxylfunktionellen Polysiloxanen, bei denen die Carboxylgruppen über sogenannte Spacergruppen mit der Hauptkette verbunden sind. Diese Polysiloxane werden in wässriger Emulsion in Gegenwart von Emulgatoren eingesetzt, die die Polysiloxane ausreichend emulgieren und die Hydrophobierung nicht beeinträchtigen. Mit dem dort beschriebenen Verfahren wird ein hoher Grad der Hydrophobierung von Leder mit Maeser-Werten bis über 100 000 Knickungen erreicht.

Schließlich ist auch aus der internationalen Patentanmeldung WO 98/04748 ein verbessertes Verfahren zum Hydrophobieren von Leder und Pelzen bekannt, die in Abwesenheit von vegetabilen, synthetischen oder mineralischen Gerbstoffen nur mit Polymergerbstoffen gegerbt werden. Bei diesem Verfahren, bei dem eine zusätzliche und von der Gerbung getrennte Hydrophobierung mit Polysiloxanen nach der Gerbung mit Polymergerbstoffen erfolgt, wird das Ziel verfolgt, die hydrophobierende Wirkung der Polymergerbstoffe zu verstärken. Als Polysiloxane werden dabei funktionelle und besonders bevorzugt kammartig carboxylfunktionelle Polysiloxane eingesetzt.

Die Verwendung von carboxylfunktionellen Siloxanen zur Hydrophobierung von Ledern bewirkt zwar eine gegenüber den bisherigen Hydrophobierungsverfahren deutliche Verbesserung hinsichtlich der Wasserdichtigkeit der behandelten Leder. Allein oder mit Emulgatoren angewendet weisen diese Produkte jedoch erfahrungsgemäß bezüglich der erhaltenen Lederqualität wesentliche Nachteile auf. Wegen der fehlenden nachgerbenden und besonders der nur eingeschränkten fettenden Eigenschaften von Polysiloxanen führt der Alleineinsatz von carboxylfunktionellen Polysiloxanen oder der Einsatz nur mit Emulgatoren oft zu Ledern, deren Weichheit, Fülle und Griff den gestellten Anforderungen nicht genügen. Deshalb ist häufig ein Einsatz von handelsüblichen, klassischen Hydrophobierungsmitteln wie Paraffin- und Wachsemulsionen zusätzlich zu den Polysiloxan-Emulsionen zur Erzielung der gewünschten Lederqualität notwendig.

In der EP 0 757 108 A2 werden Lederbehandlungsmittel offenbart, enthaltend eine wässrige Dispersion, in der ein Polysiloxan mit einem wasserunlöslichen amphiphilen Copolymer, welches zu 50 bis 90 Gew.-% aus wenigstens einem ethylenisch ungesättigten, hydrophoben Monomeren und zu 10 bis 50 Gew.-% aus wenigstens einem copolymerisierbaren, wasserlöslichen, ethylenisch ungesättigten, sauren oder basischen, hydrophilen Monomeren besteht und ein Molekulargewicht von 2.000 bis 10.000 g/mol aufweist, emulgiert ist. Ferner kann das Lederbehandlungsmittel Nachgerbungsmittel, Fettschmiere, amphiphile Copolymere als Hilfsstoffe umfassen.

Die bisher beschriebenen Hydrophobierungssysteme weisen durchweg Nachteile auf. Entweder ist der mit ihnen erzielte Grad der Hydrophobierung der Leder nicht ausreichend oder die Hydrophobierung zu oberflächlich oder die Griffeigenschaften der hydrophobierten Leder sind nicht optimal. Vor allem können hohe Wasserdichtigkeit und befriedigende Griffeigenschaften häufig nicht mit einem einzigen Lederbehandlungsmittel erreicht werden.

Aufgabe der vorliegenden Erfindung ist es deshalb, ein Lederbehandlungsmittel zum Hydrophobieren, Nachgerben und Fetten von Leder zur Verfügung zu stellen, das bei einfacher Anwendung in wässriger Emulsion und ohne Zusatz von Hilfsmitteln und zusätzlichen Hydrophobierungsmitteln dem Leder reproduzierbar hohe Wasserdichtigkeit verleiht und gleichzeitig sehr gute weichmachende, füllende, nachgerbende und griffverbessernde Eigenschaften besitzt. Ein derartiges Lederbehandlungsmittel sollte außerdem die Färb- und Zurichtbarkeit barkeit des behandelten Leders nicht beeinträchigen und die Herstellung von waschbarem Leder ermöglichen.

Gelöst wird diese Aufgabe durch ein Lederbehandlungsmittel, das eine Kombination
eines Carbonsäure- oder Carbonsäureanhydrid-Gruppen tragenden Polysiloxans,
eines aus hydrophilen und hydrophoben Monomereinheiten hergestellten amphiphilen Copolymers,
eines Emulgators und
eines Öls oder Wachses enthält,
wobei die Carbonsäuregruppen des Polysiloxans in neutralisierter Form vorliegen sollen.

Das erfindungsgemäße Lederbehandlungsmittel besitzt eine ausgezeichnete Lagerstabilität und bildet ohne Zusatz weiterer Hilfsmittel sehr stabile wässrige Emulsionen. Es liefert im Vergleich zur Alleinanwendung von klassischen Hydrophobierungsmitteln, Polymeren oder Polysiloxan-Emulsionen deutlich verbesserte Ergebnisse hinsichtlich der Hydrophobierung und Lederqualität. Insbesondere das Zusammenwirken von carboxylfunktionellem Polysiloxan und hydrophobierendem, fettendem und nachgerbendem Polymer in einem einzigen Lederbehandlungsmittel führt zu sich gegenseitig verstärkenden Effekten, die bei getrennter Anwendung der Einzelkomponenten nicht zu erzielen sind. Dabei bewirkt das Polymere eine sehr gute Emulgierbarkeit des Polysiloxans, wodurch eine sehr tiefgehende, den gesamten Lederquerschnitt durchdringende Hydrophobierung des Leders erzeugt wird. Der im Lederbehandlungsmittel enthaltende Emulgator stabilisiert die Emulsion, wodurch die Tiefenwirkung der Hydrophobierung weiter verstärkt wird. Das außerdem im Lederbehandlungsmittel enthaltene Öl oder Wachs verstärkt die fettende Wirkung des Polymers.

Die Anwendung des erfindungsgemäßen Mittels ist sehr einfach und sicher und führt reproduzierbar zu einem hohen Grad von Hydrophobierung mit Maeser-Werten bis zu 500 000 Knickungen sowie zu den heutigen Anforderungen gerecht werdenden Lederqualitäten mit hoher Weichheit und Fülle. Damit können alle Arten von hydrophobiertem Leder hergestellt werden, die sich durch eine sehr gute Färbbarkeit und Zurichtbarkeit auszeichnen. Der Griff der mit dem Lederbehandlungsmittel hydrophobierten Leder ist angenehm und nicht, wie häufig bei mit Hydrophobierungsmitteln behandeltem Leder, oberflächlich.

Mit dem erfindungsgemäßen Lederbehandlungsmittel ist die Herstellung sehr gut waschbarer Leder auf einfache Weise möglich.

Das erfindungsgemäße Lederbehandlungsmittel wird in der Weise angewendet, dass man es in einer Menge von 1 bis 25 Gewichtsprozent, bevorzugt in einer Menge von 4 bis 16 Gewichtsprozent, bezogen auf das Falzgewicht des Leders, in wässriger Flotte bei einem pH-Wert von 4,0 bis 8,5, bevorzugt von 4,0 bis 7,0 auf das zu behandelnde Leder vor, während oder nach der Nachgerbung 20 bis 150 min, vorzugsweise 30 bis 120 min einwirken lässt und anschließend einen pH-Wert von 3 bis 5, vorzugsweise 3,5 bis 4,5, einstellt.

Zur Erzielung einer optimalen Hydrophobierung kann anschließend noch eine Behandlung mit einem zwei-, drei- oder vierwertigen Metallsalz, insbesondere mit einem basischen Chromsulfat oder mit Aluminium- oder Zirkoniumsulfat durchgeführt werden. Allerdings ist auch ohne Fixierung mit Metallsalzen eine - wenn auch etwas schwächere - Hydrophobierung nur durch das Absenken des pH-Wertes bei Anwendung des erfindungsgemäßen Lederbehandlungsmittel möglich.

Bei den in dem erfindungsgemäßen Lederbehandlungsmittel eingesetzten Polysiloxanen handelt es sich um carboxylfunktionelle Polysiloxane, bei denen die nicht von carboxylgruppenhaltigen Resten besetzen Valenzen des Siliziums durch Kohlenwasserstoffreste, insbesondere Methyl-, Ethyl-, Propyloder Phenylreste besetzt sind und die Carboxylfunktionen über Zwischengruppen, sogenannte Spacer-Gruppen, an die Polysiloxankette gebunden sind. Die Carboxylfunktionen bestehen aus Carbonsäureanhydrid- oder bevorzugt Carbonsäuregruppen.

Besonders bevorzugt sind Dimethyl oder Diethylpolysiloxane mit endständig gebundenen Gruppen, sogenannte α,ω-carboxylfunktionelle Polysiloxane. Die Carbonsäure(anhydrid)-Gruppen können auch in seitenständiger, kammartiger Stellung an der Hauptkette vorliegen.

Diese Polysiloxane sind durch ihre Säurezahlen von 10 bis 120, bevorzugt 20 bis 90 sowie durch ihre Viskosität von 100 bis 1 000 mPas, bevorzugt 150 bis 700 mPas (gemessen bei 25°C) charakterisiert.

Die Polysiloxan-Kettenlänge wird durch die Anzahl der (SiO)ₙ∼ Einheiten mit n = 5 bis 100, bevorzugt n = 10 bis 70, charakterisiert.

Die Zwischengruppen, die die Carboxylgruppen mit der Polysiloxan-Hauptkette verbinden, bestehen aus linearen oder verzweigten C₁-C₄₀-Alkylen-, insbesondere linearen C₂-C₃₀-Polymethylengruppen oder aus linearen oder verzweigten C₁-C₄₀-Alkylen-, insbesondere linearen C₂-C₃₀-Polymethylengruppen, die durch bis zu 10, bevorzugt bis zu 6 nicht benachbarte Sauerstoffatome oder Gruppen der Formel -NR₁-, -CO-, -CO-NR₁- bzw. -CO-O- unterbrochen sein und zusätzlich bis zu 8 Carboxyl- oder Carbonsäureamidgruppen der Formel -CO-NR₁R₂tragen können, wobei die Reste R₁ und R₂ für Wasserstoff bzw. C₁-C₄-Alkyl stehen.

Diese Zwischengruppen sind entweder direkt oder über ein Sauerstoffatom, eine Amin-Funktion -NR-, eine CarbonylFunktion, eine Carbonsäureamid-Gruppe der Formel -CO-NR- oder eine Carbonsäureester-Funktion -CO-O- an die Polysiloxan-Hauptkette gebunden, wobei R für Wasserstoff oder C₁-C₄-Alkyl steht.

Als Polymerisat-Komponente sind für das erfindungsgemäße Lederbehandlungsmittel hydrophobierende Copolymerisate geeignet, die aus einer wasserlöslichen, ethylenisch ungesättigten und einer wasserunlöslichen, ehtylenisch ungesättigten Monomer-Komponente copolymerisiert und anschließend neutralisiert worden sind.

Als hydrophile Monomer-Komponente können ethylenisch ungesättigte Verbindungen mit Säure-, Säureanhydrid-, Amid- oder Ester-Gruppen wie Maleinsäure, Fumarsäure, Maleinsäureanhydrid, Acryl- oder Methacrylsäure, Acryl- oder Methacrylamide verwendet werden. Besonders bevorzugt sind dabei Acryl- und Methacrylsäure sowie Maleinsäureanhydrid.

Geeignete hydrophobe Monomer-Komponenten sind ethylenisch ungesättigte Verbindungen, die über Kohlenwasserstoff-, Ester-, Ether- und ähnliche Gruppen an die Monomer-Doppelbindung gebundene, langkettige Kohlenwassersoffreste tragen, z.B. α-Olefine mit 10 bis 30 C-Atomen, Alkylvinylether mit 6 bis 20 C-Atomen, Vinylester von Carbonsäuren mit 12 bis 22 C-Atomen, C₈-C₂₂-Alkylacrylate und C₈-C₂₂-Alkylmethacrylate. Besonders bevorzugt sind α-Olefine mit 12 bis 22 C-Atomen, C₁₂-C₂₂-Alkylacrylate und C₁₂-C₂₂-Methacrylate wie z.B. Cetyl-(meth)acrylat, Oleyl(meth)acrylat oder Steary(meth)acrylat.

Die Copolymere sind mit üblichen Basen wie Alkalihydroxiden, Erdalkalihydroxiden, Ammoniak, primären, sekundären oder tertiären Aminen oder Alkanolaminen, vorzugsweise mit Alkalihydroxiden oder Alkanolaminen neutralisiert und werden in bereits neutralisierter Form in das erfindungsgemäße Lederbehandlungsmittel eingearbeitet.

Geeignete Emulgatoren für das erfindungsgemäße Lederbehandlungsmittel sind im Prinzip alle oberflächenaktiven, nichtionischen oder anionischen Substanzen, die die wässrige Emulsion aus Polysiloxan, Polymer und Öl stabilisieren können und die Hydrophobierung nicht beeinträchtigen. Besonders bevorzugt sind dabei anionische Emulgatoren wie Fettsäuresarkoside, z.B. N-Oleylsarkosid, N-Stearylsarkosid oder N-Laurylsarkosid, niedrig ethoxylierte Phosphorsäureester auf Oleyl- oder Talgfett-Basis mit 3 bis 5 Mol Ethylenoxid oder nicht oder niedrig ethoxylierte Sulfosuccinate auf Kokos- oder Talgfett-Basis mit bis zu sechs Ethylenoxideinheiten.

Als fettende Öle oder Wachse sind sowohl synthetische Öle oder Wachse wie Paraffinöle oder Alkylbenzole, Paraffinwachse, Polyethylenwachse, aber auch native Öle oder Wachse wie Wollfett, Bienenwachs, Fischöl, Rüböl und Lecithin für das erfindungsgemäße Lederbehandlungsmittel geeignet.

Die pH-Wert-Einstellung des Mittels erfolgt mit üblichen Basen wie Alkalihydroxiden, Ammoniak, Aminen oder Alkanolaminen, bevorzugt mit Alkalihydroxiden oder Alkanolaminen.

Als Lösungsmittel sind Glykole und Glykolether wie z.B. Hexylenglykol, Butylglykol, Butyldiglykol, 1.2-Propylenglykol, Monoethylenglykol etc. geeignet.

Das erfindungsgemäße Lederbehandlungsmittel sollte vorzugsweise folgende mengenmäßige Zusammensetzung aufweisen:
2 bis 20 Gewichtsprozent, bevorzugt 3 bis 15 Gewichtsprozent, des carboxylfunktionellen Polysiloxans;
5 bis 50 Gewichtsprozent, bevorzugt 10 bis 35 Gewichtsprozent, des hydrophobierenden, fettenden, nachgerbenden Copolymers;
1 bis 20 Gewichtsprozent, bevorzugt 2 bis 15 Gewichtsprozent, des Emulgators;
5 bis 30 Gewichtsprozent, bevorzugt 8 bis 25 Gewichtsprozent, des Öls oder Wachses;
0,5 bis 5 Gewichtsprozent, bevorzugt 1 bis 46 Gewichtsprozent, eines Neutralisationsmittels;
1 bis 10 Gewichtsprozent, bevorzugt 2 bis 8 Gewichtsprozent, eines Lösungsmittels.

### Beispiele

### A) Herstellung erfindungsgemäßer Produkte

### Beispiel 1

50g einer 30%-igen Copolymerisat-Emulsion auf Alkyl(meth)-acrylat-(Meth)acrylsäure-Basis (Viskosität 250 bis 2 500 cps, Brookfield, bei 60°C) werden mit 10 g Paraffinöl, 10g N-Laurylsarkosin, 12g eines Dimethylpolysiloxans mit endständigen Carbonsäuregruppen, einer Säurezahl von 90 (mg KOH/g) und einer Viskosität von 650 mPas (25°C), und 17g Wasser bei 35°C unter Rühren bis zur Homogenität gemischt. Nach Zugabe von 1g Monoethanolamin (100%-ig) und 3g Hexylenglykol wird 1 Stunde bei 35°C gerührt.

Das entstandene hellgelbe Produkt ist flüssig, hat einen pH-Wert von 8,2 und einen Aktivgehalt von ca 48%.

### Beispiel 2

55 g einer 35%-igen Copolymerisat-Emulsion auf Alkyl(meth)-acrylat-(Meth)acrylsäure-Basis (Viskosität 250 bis 2 500 cps, Brookfield, bei 60°C) werden mit 11g Paraffinöl, g Laurylalkoholpolyglykolethersulfosuccinat (3 EO), 15g eines Dimethylpolysiloxans mit endständigen Carbonsäuregruppen, einer Säurezahl von 70 (mg KOH/g) und einer Viskosität von 450 mPas (25°C) und 10 g Wasser bei 35°C unter Rühren bis zur Homogenität gemischt. Nach Zugabe von 2 g Kalilauge (45%-ig) und 3g Hexylenglykol wird 1 Stunde bei 35°C gerührt.

Das entstandene hellgelbe Produkt ist flüssig, hat einen pH-Wert von 8,0 und einen Aktivgehalt von ca. 52%.

### Beispiel 3

37g einer 35%-igen Copolymerisat-Emulsion auf Alkyl(meth)-acrylat-(Meth)acrylsäure-Basis (Viskosität 250 bis 2 500 cps, Brookfield, bei 60°C) werden mit 12g Alkylbenzol, 7g N-Oleylsarkosin, 7g Laurylalkoholpolyglykolethersulfosuccinat (3 EO), 14g eines Dimethyl-polysiloxans mit endständigen Carbonsäuregruppen, einer Säurezahl von 90 (mg KOH/g) und einer Viskosität von 650 mPas (25°C), 20g Wasser bei 35°C unter Rühren bis zur Homogenität gemischt. Nach Zugabe von 3g Kalilauge (45%-ig) und 2g Butylglykol wird 1 Stunde bei 35°C gerührt.

Das entstandene hellgelbe Produkt ist flüssig, hat einen pH-Wert von 8,3 und einen Aktivgehalt von ca. 52%.

### B) Anwendungsbeispiele

(Wenn nicht anders angegeben, beziehen sich alle Prozentangaben auf das Falzgewicht des Leders)

### Anwendungsbeispiel 1: Hydrophobierte, waschbare Oberleder

Chromgegerbte Rindleder (wet blue) der Falzstärke 1,6 bis 1,8 mm wurden mit 200% 35°C warmem Wasser und 0,2% Oxalsäure 20 Minuten lang gewaschen, wobei sich in der Flotte ein pH-Wert von 3,6 einstelle.

Die Nachchromierung der so behandelten Leder erfolgte mit 3% Chromsyntan und 2% eines handelsüblichen Chromgerbstoffs (26% Cr₂O₃-Gehalt, 33% basisch) über eine Dauer von 60 Minuten in frischer Flotte bei einer Temperatur von 35°C.

Anschließend wurde der pH-Wert mit 1% Natriumformiat auf ca. 3,8 bis 4,0 eingestellt. Die Neutralisation der Wet-Blue wurde mit 2% Neutralisationssyntan und 1,5% Natriumformiat sowie 0,8% Natriumbicarbonat in einer Zeit von 90 Minuten durchgeführt. Der End-pH-Wert der Neutralisationsflotte betrug 5,0. Der Lederquerschnitt, getestet mit Bromkresolgrün-Lösung, zeigte eine egale bläuliche Färbung.

Am Ende der Neutralisation wurde entflottet und mit 200% 35°C warmem Wasser über eine Dauer von 10 Minuten gewaschen.

Die Nachgerbung und Färbung erfolgten in 50% 30°C warmem Wasser. Als Nachgerbstoffe wurden 3% Polymergerbstoff, 2% Acrylpolymergerbstoff sowie 4% phenolischer Weißgerbstoff verwendet. In demselben Bad wurden 5% des erfindungsgemäßen Hydrophobierungsmittels sowie 3% eines löslichen Schwefelfarbstoffes eingesetzt. Die Dauer dieser Behandlung betrug 90 Minuten. Nach der Zugabe von 100% 50°C warmem Wasser wurde nach weiteren 30 Minuten in zwei Schritten ä 20 Minuten mit handelsüblicher Ameisenäsure (85%ig) auf einen pH-Wert von 3,9 bis 4,0 abgesäuert.

Die Nachgerbstoffe wurden abgelassen, und es wurde einmal mit 200% Wasser bei 35°C gewaschen. Die Hauptfettung erfolgte in frischer Flotte. Die Flottenlänge betrug 150%, die Temperatur der Flotte 50°C. In der Hauptfettung kamen weitere 7% des erfindungsgemäßen Hydrophobierungsmittels zum Einsatz. Das Hydrophobierungsmittel wurde zuvor in 50°C warmem Wasser im Verhältnis 1:5 emulgiert. Nach einer Dauer von 60 Minuten erfolgte Absäuerung mit Ameisensäure in drei Schritten ä 10 + 30 Minuten auf einen End-pH von 3,6 bis 3,7. Die Flotte wurde anschließend abgelassen und zweimal mit 200% 35°C warmem Wasser 10 Minuten gewaschen.

Die anschließende Fixierung mit einem handelsüblichen Chromgerbstoff (26% Cr₂O₃-Gehalt und 33% basisch) erfolgte in 200% 40°C warmem Wasser über eine Dauer von 90 Minuten.

Abschließend wurde mit 200% kaltem Wasser zweimal gewaschen.

Die so erhaltenen Leder wurden über Nacht gelagert und anschließend ausgereckt, vakuumgetrocknet, hängegetrocknet, konditioniert und gestollt.

Die Leder wurden nach der IUF-Methode 423 dem Waschbarkeitstest unterzogen und zeigten ausgezeichnete Ergebnisse. Auch nach mehrmaligem Waschen trat keine Schrumpfung der Leder auf.

Die nach dem beschriebenen Verfahren produzierten Leder waren voll und sehr weich, einhergehend mit einem angenehmen, leicht wachsigen Griff und einem feinen, enganliegenden Narben.

Die Prüfung auf dem Bally-Penetrometer bei 15% Stauchung ergab 11,2% Wasseraufnahme nach einer Dauer von 6 Stunden ohne Wasserdurchtritt.

Die Maeser-Prüfung ergab mehr als 250 000 Knickungen mit einer Wasseraufnahme von 12,3%.

### Anwendungsbeispiel 2: Hydrophobierte, waschbare Möbelleder

Chromgegerbte Rindleder (wet blue) der Falzstärke 1,2 bis 1,4 mm wurden mit 200% 35°C warmem Wasser und 0,2% Essigsäure 15 Minuten lang gewaschen, wobei sich in der Flotte ein pH-Wert von 3,6 einstellte.

Die Nachchromierung der so behandelten Leder erfolgte mit 2% Chromsyntan und 2% eines handelsüblichen Chromgerbstoffs (26% Cr₂O₃-Gehalt, 33% basisch)über eine Dauer von 60 Minuten in frischer Flotte bei einer Temperatur von 35°C.

Anschließend wurden 100% 35°C warme Flotte hinzugefügt. Die Neutralisation der Wet-blue wurde mit 2% Natriumformiat, 2% Neutralisationssyntan und 1,5% Natriumbicarbonat in einer Zeit von 90 Minuten durchgeführt. Der End-pH-Wert der Neutralisationsflotte betrug 6,5. Der Lederquerschnitt, getestet mit Bromkresolpurpur-Lösung, zeigte eine egale purpurrote Färbung.

Am Ende der Neutralisation wurde entflottet und mit 200% 35°C warmem Wasser über eine Dauer von 10 Minuten gewaschen.

Die Nachgerbung erfolgte in 100% 35°C warmem Wasser. Als Nachgerbstoffe wurden 4% Acrylpolymergerbstoff und 4% phenolischer Weißgerbstoff verwendet.

Nach Ablauf der Nachgerbung erfolgte die Fettung. Es wurden 70% 50°C warmes Wasser zur Flotte hinzugefügt. In der Hauptfettung kamen 10% des erfindungsgemäßen Hydrophobierungsmittels zum Einsatz. Das Hydrophobierungsmittel wurde zuvor in 50°C warmem Wasser im Verhältnis 1:5 emulgiert. Nach einer Dauer von 90 Minuten wurde mit Ameisensäure in drei Schritten a 10 + 30 Minuten auf einen End-pH-Wert von 3,8 abgesäuert. Die Flotte wurde anschließend abgelassen und einmal mit 200% 35°C warmem Wasser 10 Minuten gewaschen.

Die so erhaltenen Leder wurden über Nacht abgelagert, anschließend ausgereckt, vakuumgetrocknet, hängegetrocknet, konditioniert, gestollt, gespannt, geschliffen und entstaubt. Anschließend wurde das Gewicht der Leder bestimmt. Alle weiteren Angaben beziehen sich auf das Trockengewicht des Leders:

Die Crust-Leder wurden mit 1000% 45°C warmem Wasser und 2% des erfindungsgemäßen Hydrophobierungsmittels 2 Stunden lang broschiert. Nach der Broschur wurde entflottet.

Die Färbung erfolgte in 400% 30°C warmem Wasser. Als Farbstoff kamen 5% eines Schwefelfarbstoffes zum Einsatz. Nach Ablauf von 60 Minuten wurden der Färbeflotte 400% 50°C warmes Wasser hinzugefügt. Für die sich anschließende Fettung kamen 6% des erfindungsgemäßen Hydrophobierungsmittels zum Einsatz. Nach Dauer von 60 Minuten wurde mit Ameisensäure in drei Schritten a 10 + 30 Minuten auf einen End-pH-Wert von 3,8 abgesäuert. Die Flotte wurde anschließend abgelassen und einmal mit 800% 35°C warmem Wasser 10 Minuten lang gewaschen.

Die anschließende Fixierung mit einem handelsüblichen Chromgerbstoff (26% Cr₂O₃-Gehalt und 33% basisch) erfolgte in 600% 35°C warmem Wasser über eine Dauer von 90 Minuten. Anschließend wurde mit 800% kaltem Wasser dreimal 15 Minuten gewaschen.

Die so erhaltenen Leder wurden über Nacht abgelagert und anschließend ausgereckt, hängegetrocknet, konditioniert und gestollt.

Die Leder wurden nach der IUF-Methode 423 dem Waschbarkeitstest unterzogen und zeigten ausgezeichnete Ergebnisse. Auch nach mehrmaligem Waschen trat keine messbare Schrumpfung bzw. Flächenverlust der Leder auf, die Leder waren immer noch teilhydrophobiert.

Die nach dem beschriebenen Verfahren hergestellten Leder waren voll und weich und zeichneten sich durch ein egales Millkorn über die gesamte Lederfläche aus.

Die Prüfung auf dem Bally-Penetrometer bei 15% Stauchung ergab 10,7% Wasseraufnahme nach einer Dauer von 6 Stunden ohne Wasserdurchtritt.

Die Maeser-Prüfung ergab 70 000 Knickungen mit einer Wasseraufnahme von 13,5%.

## Patentansprüche

1. Lederbehandlungsmittel, **dadurch gekennzeichnet, dass** es eine Kombination
eines Carbonsäure- oder Carbonsäureanhydrid-Gruppen tragenden Polysiloxans,
eines aus hydrophilen und hydrophoben Monomereinheiten hergestellten, amphiphilen Copolymers,
eines Emulgators und
eines Öls oder Wachses enthält,
wobei die Carbonsäuregruppen des Polysiloxans in neutralisierter Form vorliegen.

2. Lederbehandlungsmittel nach Anspruch 1, **dadurch gekennzeichnet, dass** das Polysiloxan die Carbonsäure- oder Carbonsäureanhydrid-Gruppen in endständiger, α,ω-Stellung oder in seitenständiger, kammartiger Stellung an der Hauptkette trägt.

3. Lederbehandlungsmittel nach den Ansprüchen 1 und 2, **dadurch gekennzeichnet, dass** die Carbonsäure- oder Carbonsäureanhydrid-Gruppen über Zwischengruppen mit der Polysiloxan-Hauptkette verbunden sind.

4. Lederbehandlungsmittel nach den Ansprüchen 1 bis 3, **dadurch gekennzeichnet, dass** die nicht von Carbonsäure- oder Carbonsäureanhydrid-Gruppen besetzten Valenzen des Siliciums Kohlenwasserstoffreste tragen und das Polysiloxan eine Säurezahl von 10 bis 120, eine Viskosität von 100 bis 1000 mPas (gemessen bei 25°C) aufweist und 5 bis 100 (SiO)-Einheiten enthält.

5. Lederbehandlungsmittel nach den Ansprüchen 1 bis 4, **dadurch gekennzeichnet, dass** das aus hydrophilen und hydrophoben Monomereinheiten hergestellte, amphiphile Copolymer
aus einem hydrophilen, ethylenisch ungesättigten Monomeren aus der Gruppe der Dicarbonsäuren, Dicarbonsäureanhydride oder der (Meth)-acrylsäuren und
aus einem hydrophoben, ethylenisch ungesättigten Monomeren aus der Gruppe der α-Olefine, Alkylvinylether, Vinylester oder Alkyl(meth)-acrylate besteht und in neutralisierter Form vorliegt.

6. Lederbehandlungsmittel nach den Ansprüchen 1 bis 5, **dadurch gekennzeichnet, dass** der Emulgator aus der Gruppe der Fettsäuresarkoside, der ethoxylierten Phosphorsäureester oder Sulfosuccinate mit bis zu sechs Ethylenoxideinheiten ausgewählt ist.

7. Lederbehandlungsmittel nach den Ansprüchen 1 bis 6, **dadurch gekennzeichnet, dass** das Öl oder Wachs aus der Gruppe der synthetischen Paraffinöle, der Paraffinwachse oder der Alkylbenzole oder aus der Gruppe der natürlichen Wachse, des Wollfetts, des Lecithins oder des Rüböls ausgewählt ist.

8. Lederbehandlungsmittel nach den Ansprüche 1 bis 7, **dadurch gekennzeichnet, dass** es eine Zusammensetzung von
2 bis 20 Gew.-% des Carboxyl- oder Carbonsäuregruppen tragenden Polysiloxans,
5 bis 50 Gew-% des aus hydrophilen und hydrophoben Monomereinheiten hergestellten, amphiphilen Copolymers,
1 bis 20 Gew.-% des Emulgators und
5 bis 30 Gew.-% des Öls oder Wachses aufweist und außerdem
0,5 bis 5 Gew.-% eines Neutralisationsmittels und
1 bis 10 Gew.-% eines organischen Lösungsmittels enthält.

9. Verfahren zur Lederbehandlung, **dadurch gekennzeichnet, dass** man das Lederbehandlungsmittel der Ansprüche 1 bis 8 in einer Menge von 1 bis 25 Gew.-%, bezogen auf das Falzgewicht des Leders, in wässriger Flotte bei einem pH-Wert von 4,0 bis 8,5 während oder nach der Nachgerbung 20 bis 150 Minuten auf das zu behandelnde Leder einwirken lässt und anschließend einen pH-Wert von 3 bis 5 einstellt.

10. Verfahren nach Anspruch 9, **dadurch gekennzeichnet, dass** anschließend noch eine Behandlung mit einem zwei-, drei- oder vierwertigen Metallsalz durchgeführt wird.

11. Waschbares Leder, **dadurch gekennzeichnet, dass** es mit Hilfe eines Lederbehandlungsmittels der Ansprüche 1 bis 8 hergestellt worden ist.

## Claims

1. Leather treatment agent **characterised in that** it contains a combination of
a polysiloxane carrying a carboxylic acid or carboxylic acid anhydride group,
an amphiphilic copolymer made from hydrophilic and hydrophobic monomer units,
an emulsifier and
an oil or wax,
where the carboxylic acid groups of the polysiloxane are present in neutralised form.

2. Leather treatment agent according to claim 1, **characterised in that** the polysiloxane carries the carboxylic acid or carboxylic acid anhydride groups in terminal α, ω positions or in lateral comb-like positions on the main chain.

3. Leather treatment agent according to claim 1 or claim 2, **characterised in that** the carboxylic acid or carboxylic acid anhydride groups are connected with the polysiloxane main chain via intermediate groups.

4. Leather treatment agent according to claims 1 to 3, **characterised in that** the silicon valences not occupied by carboxylic acid or carboxylic acid anhydride groups carry hydrocarbon residue, and the polysiloxane has an acid value of 10 to 120, a viscosity of 100 to 1000 mPas (measured at 25°C) and contains 5 to 100 (SiO) units.

5. Leather treatment agent according to claims 1 to 4, **characterised in that** the amphiphilic copolymer made from hydrophilic and hydrophobic monomer units comprises
a hydrophilic ethylenic unsaturated monomer of the group of dicarboxylic acids, dicarboxylic acid anhydrides or (meth)acrylic acids, and
a hydrophobic ethylenic unsaturated monomer of the group of α-olefins, alkylvinylether, vinylester or alkyl(meth)acrylates
and is present in neutralised form.

6. Leather treatment agent according to claims 1 to 5, **characterised in that** the emulsifier is selected from the group of fatty acid sarcosides, ethoxylated phosphoric acid esters or sulphosuccinates with up to six ethylene oxide units

7. Leather treatment agent according to claims 1 to 6, **characterised in that** the oil or wax is selected from the group of synthetic paraffin oils, paraffin waxes or alkylbenzenes or from the group of natural wax, wool fat, lecithin or colza oil.

8. Leather treatment agent according to claims 1 to 7, **characterised in that** it contains a composition of
2 to 20 w.% of the polysiloxane carrying the carboxyl or carboxylic acid groups,
5 to 50 w.% of the amphiphilic copolymer made from hydrophilic and hydrophobic monomer units,
1 to 20 w.% emulsifier, and
5 to 30 w.% of the oil or wax and also
0.5 to 5 w.% of a neutralisation agent and
1 to 10 w.% of an organic solvent.

9. Process for leather treatment **characterised in that** the leather treatment agent of claims 1 to 8, in a quantity of 1 to 25 w.% in relation to the folded weight of the leather, is left to work on the leather to be treated for 20 to 150 minutes in a watery liquor at a pH value of 4.0 to 8.5 during or after retanning, and then a pH value of 3 to 5 is set.

10. Process according to claim 9, **characterised in that** then a further treatment is performed with a bivalent, trivalent or tetravalent metallic salt.

11. Washable leather **characterised in that** it is produced using a leather treatment agent of claims 1 to 8.

## Revendications

1. Agent de traitement du cuir, **caractérisé en ce qu**'il contient une combinaison constituée
d'un polysiloxane portant des groupements d'acides carboxyliques ou d'anhydrides d'acides carboxyliques,
un copolymère amphiphile fabriqué à base d'unités de monomères hydrophiles et hydrophobes,
d'un agent émulsifiant et
d'une huile ou d'une cire,
les groupements d'acides carboxyliques du polysiloxane étant présents sous une forme neutralisée.

2. Agent de traitement du cuir selon la revendication 1, **caractérisé en ce que** le polysiloxane porte les groupements d'acides carboxyliques ou d'anhydrides d'acides carboxyliques en position finale α, ω ou en position latérale en peigne sur la chaîne principale.

3. Agent de traitement du cuir selon la revendication 1 ou 2, **caractérisé en ce que** les groupements d'acides carboxyliques ou d'anhydrides d'acides carboxyliques sont fixés sur le polysiloxane par des groupements intermédiaires.

4. Agent de traitement du cuir selon l'une des revendications 1 à 3, **caractérisé en ce que** les valences du silicium qui ne sont pas occupées par des groupements d'acides carboxyliques ou d'anhydrides d'acide carboxylique portent des radicaux d'hydrocarbures et le polysiloxane présente un nombre d'acide compris entre 10 et 120, une viscosité comprise entre 100 et 1 000 mPas (mesurée à 25 °C) et comporte de 5 à 100 unités (SiO).

5. Agent de traitement du cuir selon l'une des revendications 1 à 4, **caractérisé en ce que** le copolymère amphiphile fabriqué à base d'unités de monomères hydrophiles et hydrophobes est composé
d'un monomère hydrophile, éthylénique insaturé choisi dans le groupe des acides dicarboxyliques, des anhydrides d'acides dicarboxyliques ou des acides (méth)acryliques et
d'un monomère hydrophobe éthylénique insaturé choisi dans le groupe des a-oléfines, des éthers alkylvinyliques, des esters vinyliques ou des alkyl(méth)acrylates et est présent sous une forme neutralisée.

6. Agent de traitement du cuir selon l'une des revendications 1 à 5, **caractérisé en ce que** l'agent émulsifiant est choisi dans le groupe des sarcosides d'acides gras, des esters d'acides phosphoriques éthoxylés ou des sulfosuccinates avec jusqu'à six unités d'oxydes d'éthylène.

7. Agent de traitement du cuir selon l'une des revendications 1 à 6, **caractérisé en ce que** l'huile ou la cire est choisi dans le groupe des huiles de paraffine synthétique, des cires de paraffine ou des alkylbenzènes ou dans le groupe des cires naturelles, de la graisse de laine, de la lécithine ou de l'huile de colza.

8. Agent de traitement du cuir selon l'une des revendications 1 à 7, **caractérisé en ce qu**'il a une composition de
2 à 20 % en poids de polysiloxane portant des groupements d'acides carboxyliques ou d'anhydrides d'acides carboxyliques,
5 à 50 % en poids du copolymère amphiphile fabriqué à base d'unités de monomères hydrophiles et hydrophobes,
1 à 20 % en poids de l'agent émulsifiant,
5 à 30 % en poids de l'huile ou de la cire et contient en outre
0,5 à 5 % en poids d'un agent neutralisant et
1 à 10 % en poids d'un solvant organique.

9. Procédé de traitement du cuir, **caractérisé en ce que** l'on laisse agir sur le cuir à traiter l'agent de traitement du cuir selon les revendications 1 à 8 dans une quantité de 1 à 25 % en poids rapporté au poids brut du cuir, dans un bain aqueux à un pH compris entre 4,0 et 8,5 pendant ou après le dernier tannage durant 20 à 150 minutes puis on ajuste le pH à une valeur comprise entre 3 et 5.

10. Procédé selon la revendication 9, **caractérisé en ce qu**'ensuite on réalise un traitement avec un sel métallique divalent, trivalent ou tétravalent.

11. Cuir lavable, **caractérisé en ce qu**'il est fabriqué à l'aide d'un agent de traitement du cuir des revendications 1 à 8.
